# EUROPEAN PATENT APPLICATION

(11) **EP 3 651 489 A1**
(43) Date of publication of application: **13.05.2020**
(21) Application number: 18306465.8
(22) Date of filing: 08.11.2018
(51) Int. Cl.: H04W 12/04, H04W 12/06, H04W 12/08, H04W 4/50, H04W 8/18

(54) **METHOD FOR AUTHENTICATING A SECURE ELEMENT COOPERATING WITH A TERMINAL, CORRESPONDING APPLET, SYSTEM AND SERVER**

(71) Applicant: Thales Dis France SA, 92190 Meudon (FR)
(72) Inventor: BRISSAUD, Maxime, 13881 Gemenos cedex (FR); TROUCHOT, Jérôme, 13881 Gemenos cedex (FR); BEGALE, Sagar Subhash, 13881 Gemenos cedex (FR); BAHARSYAH, Muhamad Pramana, 13881 Gemenos cedex (FR)
(74) Representative: Scheer, Luc

(57) **Abstract**

The invention concerns a method for authenticating at the level of a server a secure element cooperating with a terminal of a user, the method comprising:
During a provisioning phase:
- On occurrence of an event, sending, by SMS, from the terminal to the server, at least one unique reference of the secure element or of the terminal, an element of the network of the MNO to which the user has subscribed a subscription adding to the at least one unique reference the MSISDN associated to the one unique reference;
- Storing at the level of the server the MSISDN associated to the at least one unique reference;

During an authentication phase done in HTTPS:
a- Sending from the terminal to the server the at least one unique reference;
b- Sending from the server to the terminal an acknowledgement response by HTTPS and, if a MSISDN is associated to the at least one unique reference, retrieving at the level of the server the MSISDN associated to the at least one unique reference and sending from the server to the terminal an unlock key by SMS in order to inform the secure element that it has been authenticated by the server.

## Description

The present invention concerns telecommunications and more precisely a method for authenticating a secure element like a SIM card, a eUICC (embedded UICC - UICC standing for Universal Integrated Circuit Card) or a iUICC (Integrated UICC) cooperating with a terminal (a mobile phone, a smartphone, a PDA,...) by a remote server. This remote server is at least able to authenticate the secure element or an application (applet) contained in the secure element and/or in the terminal. By default, it permits to authenticate the owner of the terminal.

Typically, a mobile application is installed in the terminal of a user and the user wishes to authenticate himself in order to access to a service provided by the server.

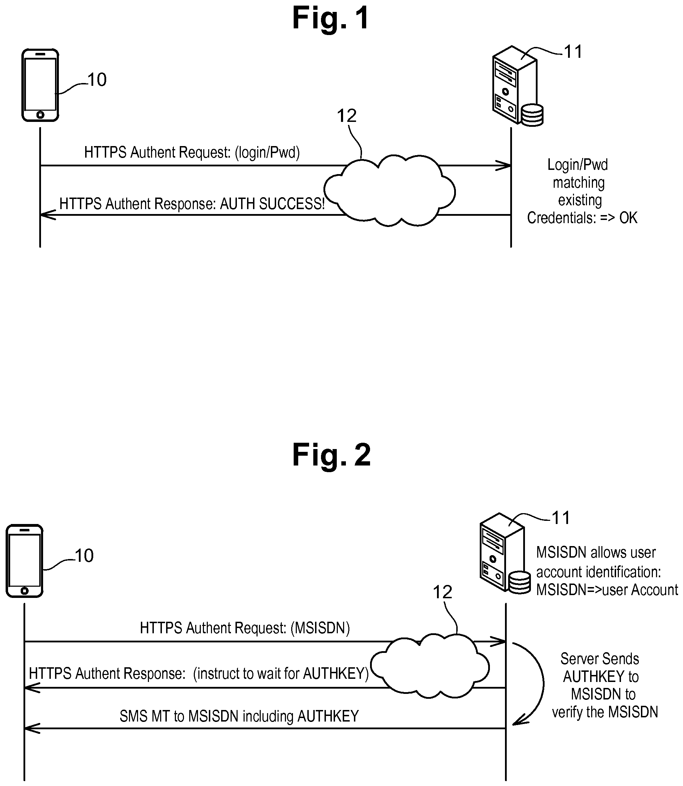

A first known way for authenticating a user consists in asking to the user to enter a login/password at the level of his terminal. This known solution is represented in figure 1.

In this figure, a terminal 10 cooperates with a secure element like a SIM card (not represented).

A remote server 11 hosts a service (bank application,...) and is dedicated to authentify the user of the terminal 10.

In this embodiment, the application installed at the level of the terminal 10 asks to the user to enter a login and a password in his terminal 10. The communication between the terminal 10 and the server 11 is secured through an https link. When the user has entered his login and password, those are transmitted in a HTTPS Authent Request message to the server 11 through the cloud 12 (Internet). The server then checks if these login and password are existing credentials and, if yes, sends back to the terminal 10 an Authentication success message on the https link. The user is then allowed to access to the service.

The problems of this first known solution are the following:
- The user must remember his login/password;
- The user might mistype his login/password;
- A malicious user could enter a stolen login/password.

In order to avoid to use a login/password, a second solution can be employed. This solution is represented in figure 2.

In this solution, the user identifies himself by entering his phone number (MSISDN) in the application. The application sends in https mode this MSISDN in an Authentication Request message. The server 11 then first sends to the application a message instructing to wait for an authentication key (AUTHKEY) in an https authentication response message. The server 11 in parallel verifies if this MSISDN corresponds to an existing account. If yes, it sends in a SMS MT (Mobile Terminated) a challenge AUTHKEY to this MSISDN. The challenge can be for example an OTP that the user has to enter in the application. The application then sends back an answer to this challenge to the server 11 that verifies if it corresponds to the sent challenge. If yes, the user is authenticated.

The problems of this second known solution are:
- The user must know the format of his MSISDN that will be recognized by the server 11: Often he might type only his national phone number, for example 0612345678, whereas the MSISDN stored at the level of the server might be +33612345678 or 0033612345678. The MSISDN format typing is therefore a problem.
- The user might mistype his MSISDN.

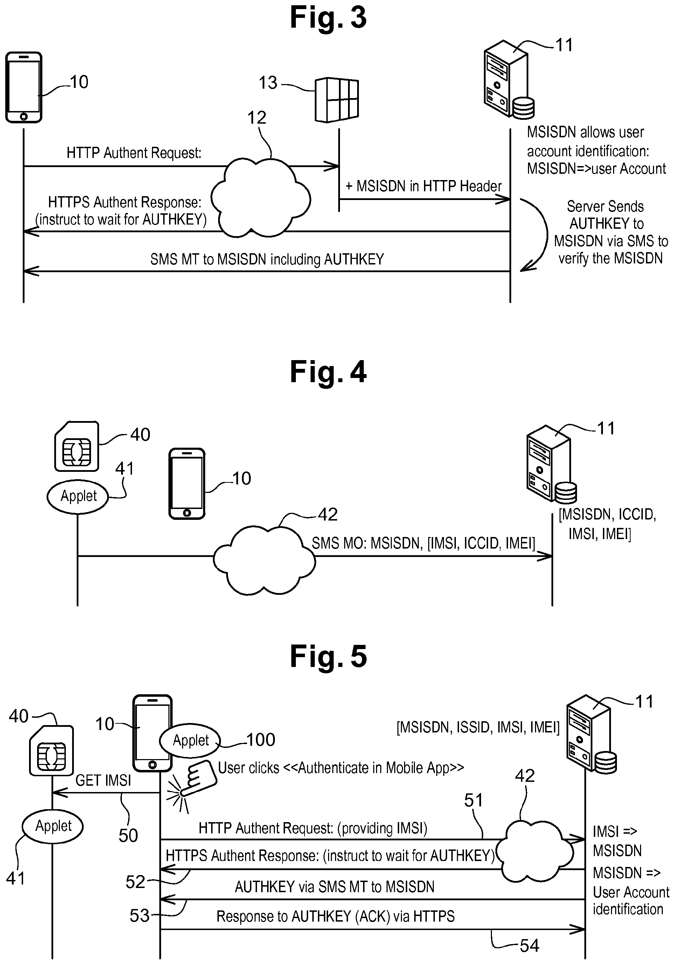

A third known solution is represented in figure 3.

In this figure the application present in the terminal 10 first sends in http an authentication request message to the server when the user requests to be authentified. This message is intercepted by the GGSN 13 of the network to which the terminal 10 is connected and the GGSN 13 adds the MSISDN of the secure element cooperating with the terminal 10. The server 11 then gets the request accompanied by the MSISDN. The next steps are the same than for the second solution.

This third solution avoids to ask to the user to type his MSISDN in the application. However, some problems are still existing:
- A fake base station can easily intercept the http authentication request sent by the terminal 10 and insert in the header of the request the MSISDN of another user;
- This solution requires an integration of a large amount of MSISDNs in the GGSN 13 of the MNO;
- This solution does not work on WiFi.

The present invention has the purpose to avoid these drawbacks in order to seamlessly authenticate a mobile application or a secure element on a remote server.

In this respect, the invention proposes a method for authenticating at the level of a server a secure element cooperating with a terminal of a user, the method comprising:
During a provisioning phase:
   - On occurrence of an event, sending, by SMS, from the terminal to the server, at least one unique reference of the secure element or of the terminal, an element of the network of the MNO to which the user has subscribed a subscription adding to the at least one unique reference the MSISDN associated to the one unique reference;
   - Storing at the level of the server the MSISDN associated to the at least one unique reference;
During an authentication phase done in HTTPS:
   a- Sending from the terminal to the server the at least one unique reference;
   b- Sending from the server to the terminal an acknowledgement response by HTTPS and, if a MSISDN is associated to the at least one unique reference, retrieving at the level of the server the MSISDN associated to the at least one unique reference and sending from the server to the terminal an unlock key by SMS in order to inform the secure element that it has been authenticated by the server.

Preferably, the at least one unique reference is one of:
- The IMSI of the secure element;
- The ICCID of the secure element;
- The IMEI of the terminal.

The unlock key can be sent in a binary SMS or in a text SMS.

The invention also concerns a computer program product to be used for authenticating at the level of a server a secure element cooperating with a terminal, the computer program product being configured to be operable to:
i- For a provisioning phase and on occurrence of an event, sending by SMS, from an applet of the secure element to the server through the terminal, at least one unique reference of the secure element or of the terminal, an element of the network of the MNO to which the user has subscribed a subscription adding to this at least one unique reference the MSISDN associated to the one unique reference;
ii- During an authentication phase done in https, sending from an applet of the terminal to the server this at least one unique reference.

The invention also concerns a system for authenticating at the level of a server a secure element cooperating with a terminal of a user, the system comprising:
i- An applet dedicated to send, during a provisioning phase, by SMS or http, from the terminal to the server, at least one unique reference of the secure element or of the terminal, an element of the network of the MNO to which the user has subscribed a subscription adding to the at least one unique reference the MSISDN associated to the one unique reference;
ii- A database at the level of the server for storing the MSISDN associated to the at least one unique reference,
the applet being dedicated to, during an authentication phase done in https, send to the server through the terminal the at least one unique reference, the server retrieving the MSISDN associated to the at least one unique reference and sending in a SMS a challenge to the secure element associated to the MSISDN.

Finally, the invention also concerns a server for authenticating a secure element cooperating with a terminal, the server comprising:
- A database for storing the MSISDN associated to the secure element and at least one unique reference of the secure element or of the terminal, the MSISDN and the at least one unique reference being transmitted by SMS to the server during a provisioning phase;
- Means for retrieving from the database, during an authentication phase done in https between the terminal and the server, and when receiving from the secure element or the terminal the at least one unique reference, the MSISDN associated to the at least one unique reference;
- Means for sending to the terminal an unlock key (AUTHKEY) by SMS in order to inform the secure element that it has been authenticated by the server.

Other features and advantages of the present invention will appear in the next description of the figures that represent:
- Figures 1 to 3 the solutions of the state of the art;
- Figure 4, an example of an auto-provisioning of a secure element according to the invention;
- Figure 5, an example of authentication of a mobile application according to the invention.

Figures 1 to 3 have been presented in view of the state in the art.

Figure 4 represents an example of an auto-provisioning of a secure element according to the invention.

In this figure, 40 represents a secure element cooperating with the terminal 10, 41 represents an applet installed at the level of the secure element 40 or at the level of the terminal 10 and 42 represents the network of a MNO with which the user of the terminal 10 has subscribed a subscription. The network 42 ensures HTTP and SMPP connectivity.

The auto-provisioning aforementioned corresponds to an enrolment of the secure element 40 at the level of the server 11. This enrolment consists for example here in sending, from the applet 41 to the server 11, through respectively the terminal 10 and the network 42 of the MNO, at least one unique reference of the secure element 40 or of the terminal 10.

In the figure, three unique references are sent: The IMSI, the ICCID and the IMEI.

The IMSI and the ICCID are stored in the secure element 40. The IMEI is stored in the terminal 10 and can be read by the applet 41 before being sent. These three unique references are here enclosed in a SMS MO (Mobile Originated). In the network of the MNO, at the level of an element of the network of the MNO to which the user has subscribed a subscription (typically a HLR), the MSISDN of the secure element 40 is inserted in the SMS (there is a relationship between the IMSI and the MSISDN, to each MSISDN corresponding a unique IMSI). The sending of the unique reference(s) can also be done in HTTP.

The server 11 then stores in a database a table linking each MSISDN to the corresponding unique reference(s).

Here we would have for example the following table:

| **MSISDN** | **IMSI** | **ICCID** | **IMEI** |
|---|---|---|---|
| 233248123526 | 620010366175360 | 8923301003661753603F | 356925090733970 |
| 233548451758 | 620010374820055 | 8923301003748200552F | 354988091757250 |
| ----------- | ----------- | ----------- | ----------- |
| 233550893394 | 620010389599467 | 8923301003895994676F | 356507092049980 |
| 233551533194 | 620010398087404 | 8923301003980874049F | 357578061513420 |

The SMS MO is sent on occurrence of an event, for example when the terminal 10 cooperating with the secure element 40 is powered on for the first time (or at each power on). It can also be at the acceptance by the user of an invitation to do so.

The next steps are illustrated in figure 5.

Figure 5 represents an example of authentication of the mobile application (indirectly of the secure element) according to the invention.

This authentication is done in HTTPS.

First of all, the user is invited to authenticate himself. The user clicks on a field presented by an application 100 on his terminal (Authenticate in Mobile app). This application is here an applet installed at the level of the terminal 10 for authenticating the service offered by the server 11 after authentication of the applet 100. The application 100 here gets the IMSI (step 50) stored in the secure element 40. Sending the IMSI is the preferred solution but it is also possible to send the IMEI (when the secure element is a eUICC or a iUICC, because then the IMEI is strongly associated to the secure element 40 and then to the ICCID and the IMSI) and/or the ICCID.

In HTTPS, the terminal 10 (the application 100) sends to the server 11 an authentication request message (step 51) containing the IMSI through the network 42. The server 11 then sends in https to the application 100 in an Authentication Response message (step 52) an instruction to wait for a challenge request, for example an authentication key AUTHKEY (unlock key of the application 100).

The server then checks if a MSISDN is associated to this IMSI. If yes, the server 11 retrieves the MSISDN associated to this IMSI and sends (step 53) to the terminal 10 the unlock key (AUTHKEY) by SMS. This SMS is sent to the MSISDN associated to the unique reference (here the IMSI).

The last step 54 (facultative) consists in sending an acknowledge response by HTTPS from the terminal 10 to the server 11 to inform the server that the application 100 has well received the AUTHKEY.

The unlock key (AUTHKEY) can be sent in a binary SMS or in a text SMS.

In the case of a binary SMS, the user has nothing to do. The AUTHKEY is automatically generated by the server 11 and sent to the application 100 to unlock it (the server 11 has authenticated the application 100).

In the case of a text SMS, the user has to enter in his terminal 10 an answer to the received AUTHKEY, like for an OTP (One Time Password). The user types the AUTHKEY that is transmitted back to the server 11 and the server 11 verifies if the AUTHKEY corresponds to the one it has sent. If yes, it has authenticated definitively the application 100 and authorizes the application to access to the required service.

The invention also concerns a computer program product to be used for authenticating at the level of a server 11 a secure element 40 cooperating with the terminal 10, the computer program product being configured to be operable to:
- For a provisioning phase (figure 4) and on occurrence of an event, sending by SMS, from an applet 41 of the secure element 40 to the server 11 through the terminal 10, at least one unique reference of the secure element 40 or of the terminal 10, an element of the network of the MNO to which the user has subscribed a subscription adding to this at least one unique reference the MSISDN associated to the one unique reference;
- During an authentication phase (figure 5) done in https, sending from an applet 100 of the terminal 100 to the server 11 this at least one unique reference.

The invention also concerns a system for authenticating at the level of the server 11 a secure element 40 cooperating with the terminal 10, the system comprising:
- An applet 41 dedicated to send, during a provisioning phase, by SMS, from the terminal 10 to the server 11, at least one unique reference of the secure element 40 or of the terminal 10, an element of the network of the MNO to which the user has subscribed a subscription adding to this at least one unique reference the MSISDN associated to the at least one unique reference;
- A database at the level of the server 11 for storing the MSISDN associated to this at least one unique reference,
the applet 41 being dedicated to, during an authentication phase done in https, send to the server 11 through the terminal 10 this at least one unique reference, the server 11 retrieving the MSISDN associated to the at least one unique reference and sending in a SMS a challenge to the secure element 40 associated to the MSISDN.

Finally, the invention also concerns a server 11 for authenticating a secure element 40 cooperating with a terminal 10, the server 11 comprising:
- A database for storing the MSISDN associated to the secure element 40 and at least one unique reference of the secure element 40 or of the terminal 10, the MSISDN and the at least one unique reference being transmitted by SMS to the server 11 during a provisioning phase;
- Means for retrieving from the database, during an authentication phase done in https between the terminal 10 and the server 11, and when receiving from the secure element 40 or the terminal 10 the at least one unique reference, the MSISDN associated to the at least one unique reference;
- Means for sending to the terminal 10 an unlock key (AUTHKEY) by SMS in order to inform the secure element 40 that it has been authenticated by the server 11.

The main advantage of the invention is that the end-user is seamlessly authenticated, without having to type his MSISDN in an application since the secure element is automatically provisioned to populate a database (comprising for example couples of MSISDN / IMSI) and the fact that mobile application 100 retrieves the IMSI from the secure element 40 and sends it to server 11 for matching purposes of the MSISDN, allowing the server to send an OTP or an unlock key to the proper MSISDN.

## Claims

1. Method for authenticating at the level of a server (11) a secure element (40) cooperating with a terminal (10) of a user, said method comprising:
During a provisioning phase:
- On occurrence of an event, sending, by SMS, from said terminal (10) to said server (11), at least one unique reference of said secure element (40) or of said terminal (10), an element of the network of the MNO to which said user has subscribed a subscription adding to said at least one unique reference the MSISDN associated to said one unique reference;
- Storing at the level of said server (11) said MSISDN associated to said at least one unique reference;
During an authentication phase done in HTTPS:
a- Sending from said terminal (10) to said server (11) said at least one unique reference;
b- Sending from said server (11) to said terminal (10) an acknowledgement response by HTTPS and, if a MSISDN is associated to said at least one unique reference, retrieving at the level of said server (11) the MSISDN associated to said at least one unique reference and sending from said server (11) to said terminal (10) an unlock key (AUTHKEY) by SMS in order to inform said secure element (40) that it has been authenticated by said server (11).

2. Method according to claim 1 wherein said at least one unique reference is one of:
- The IMSI of said secure element (40);
- The ICCID of said secure element (40);
- The IMEI of said terminal (10).

3. Method according to any of the claims 1 and 2 wherein said unlock key (AUTHKEY) is sent in a binary SMS.

4. Method according to any of the claims 1 and 2 wherein said unlock key (AUTHKEY) is sent in a text SMS.

5. A computer program product to be used for authenticating at the level of a server (11) a secure element (40) cooperating with a terminal (10), the computer program product being configured to be operable to:
i- For a provisioning phase and on occurrence of an event, sending by SMS, from an applet (41) of the secure element (40) to the server (11) through said terminal (10), at least one unique reference of said secure element (40) or of said terminal (10), an element of the network of the MNO to which the user has subscribed a subscription adding to this at least one unique reference the MSISDN associated to the one unique reference;
ii- During an authentication phase done in https, sending from an applet (100) of said terminal (10) to said server (11) this at least one unique reference.

6. System for authenticating at the level of a server (11) a secure element (40) cooperating with a terminal (10) of a user, said system comprising:
i- An applet dedicated to send, during a provisioning phase, by SMS or http, from said terminal (10) to said server (11), at least one unique reference of said secure element (40) or of said terminal (10), an element of the network of the MNO to which said user has subscribed a subscription adding to said at least one unique reference the MSISDN associated to said one unique reference;
ii- A database at the level of said server (11) for storing said MSISDN associated to said at least one unique reference,
said applet being dedicated to, during an authentication phase done in https, send to said server (11) through said terminal (10) said at least one unique reference, said server (11) retrieving the MSISDN associated to said at least one unique reference and sending in a SMS a challenge to the secure element (40) associated to said MSISDN.

7. Server (11) for authenticating a secure element (40) cooperating with a terminal (10), said server (11) comprising:
- A database for storing the MSISDN associated to said secure element (40) and at least one unique reference of said secure element (40) or of said terminal (10), said MSISDN and said at least one unique reference being transmitted by SMS to said server (11) during a provisioning phase;
- Means for retrieving from said database, during an authentication phase done in https between said terminal (10) and said server (11), and when receiving from said secure element (40) or said terminal (10) said at least one unique reference, the MSISDN associated to said at least one unique reference;
- Means for sending to said terminal (10) an unlock key (AUTHKEY) by SMS in order to inform said secure element (40) that it has been authenticated by said server (11).
